# EUROPÄISCHE PATENTSCHRIFT

(11) **EP 1 861 621 B1**
(45) Veröffentlichungstag und Bekanntmachung des Hinweises auf die Patenterteilung: **12.10.2011**
(21) Anmeldenummer: 06723608.3
(22) Anmeldetag: 21.03.2006
(51) Int. Cl.: F03G 7/06, E05B 47/00, B60R 21/00

(54) **VORRICHTUNG FÜR EINE BIDIREKTIONALE AUSLENKUNG EINES MITTELS LÄNGS EINER FÜHRUNG**
DEVICE FOR EFFECTING A BI-DIRECTIONAL DISPLACEMENT OF A MEANS ALONG A GUIDE
DISPOSITIF POUR EFFECTUER UNE DEVIATION BIDIRECTIONNELLE D'UN MOYEN LE LONG D'UN ELEMENT DE GUIDAGE

(30) Priorität: 24.03.2005 DE 102005014288; 29.04.2005 DE 102005020126
(43) Veröffentlichungstag der Anmeldung: 05.12.2007
(73) Patentinhaber: Fraunhofer-Gesellschaft zur Förderung der angewandten Forschung e.V., 80686 München (DE)
(72) Erfinder: MELZ, Tobias, 64285 Darmstadt (DE); SEIPEL, Björn, 61197 Florstadt (DE)
(74) Vertreter: Rösler, Uwe
(86) Internationale Anmeldenummer: PCT/EP2006/002608
(87) Internationale Veröffentlichungsnummer: WO 2006/100049

(56) Entgegenhaltungen:
- WO-A-03/093615
- WO-A-2005/026592
- DE-A1- 4 406 771
- US-A- 4 087 971
- US-A- 5 070 697
- PATENT ABSTRACTS OF JAPAN Bd. 1995, Nr. 10, 30. November 1995 (1995-11-30) -& JP 07 167037 A (SANKI ENG CO LTD; others: 02), 4. Juli 1995 (1995-07-04)

## Beschreibung

Die Erfindung betrifft eine Vorrichtung für eine bidirektionale Auslenkung eines Mittels oder eines Anschlusselementes, nachfolgend als Mittel bezeichnet, längs einer Führung, das reversibel zwischen wenigstens zwei Positionen längs der Führung bewegbar ist, mit einem mit dem Mittel in Wirkverbindung bringbaren Antriebsmittel, das längs der Führung das Mittel kraftbeauschlagt in eine Richtung auszulenken vermag, sowie einem mit dem Mittel in Wirkverbindung stehenden Aktor, der das Mittel in die entgegen gesetzte Richtung längs der Führung kraftbeaufschlagt auszulenken vermag, wobei der Aktor mittels eines Wandlerwerkstoffes betätigbar ist.

### Stand der Technik

Zur Herstellung kraftschlüssiger Verbindungen zwischen zwei Komponenten, dienen Verriegelungsmechanismen, die grundsätzlich unterteilbar sind in Systeme, die einen starren, nicht lösbaren Verbund zwischen zwei Komponenten herbeiführen, sowie wieder lösbare, d. h. entriegelbare Verriegelungssysteme. Die weiteren Ausführungen betreffen insbesondere Verbindungs- bzw. Verriegelungsmechanismen der an zweiter Stelle genannten Gattung, mit denen es möglich ist, eine lösbarfeste Verbindung zwischen zwei beweglich zueinander gelagerten Körpern bzw. Komponenten herzustellen.

Lösbarfeste Verriegelungsmechanismen sehen an zwei miteinander zu verfügenden Komponenten mechanische Lagerpunkte vor, zwischen denen es gilt eine mechanisch belastbare Verbindung herzustellen. Im einfachsten Fall ist am Lagerpunkt einer Komponente ein mechanisches Verbindungselement vorgesehen, das durch entsprechende Betätigung in den Bereich des Lagerpunktes der anderen Komponente ausgelenkt wird, an der das Verbindungsmittel eine Fügeverbindung eingeht. Beispielsweise sei hierzu auf eine Bolzenverbindung verwiesen, mit einem linear beweglichen Bolzen, der innerhalb einer Komponente geführt ist, die gegenüber einer zweiten Komponente bspw. schwenkbar gelagert ist. Die zweite Komponente sieht hingegen eine zylinderförmige, an die Außenkontur des Bolzens angepasste Ausnehmung vor, in die der Bolzen durch entsprechende Auslenkung eingefügt werden kann. Befindet sich in einer sog. offenen Stellung der Bolzen vollständig in der ersten Komponente, so ist es möglich zumindest die erste Komponente gegenüber der zweiten Komponente längs einer vorgegebenen Schwenkachse frei zu verschwenken. Im verriegelten Zustand beider Komponenten gegeneinander ist der Bolzen in einer bestimmten relativen Ausrichtung beider Komponenten zueinander ausgefahren und mündet in die entsprechende Ausnehmung der gegenüberliegenden Komponente. Beide Komponenten sind somit gegeneinander arretiert. Wird der Bolzen erneut in eine rückwärtige Position überführt, so ist ein freies Verschwenken zumindest einer Komponente relativ zur anderen Komponente wieder möglich.

Zur Betätigung des vorstehenden Verriegelungsmechanismus, d.h. zur Realisierung des den Bolzen antreibenden Linearmechanismus bieten sich in an sich bekannter Weise verschiedene Antriebsarten an, bspw. ein motorischer Antrieb, der über einen Getriebemechanismus den linear beweglichen Bolzen je nach Bewegungsrichtung durch Umschalten der Drehrichtung zu verschieben vermag, oder ein Federkraft beaufschlagter Beschleunigungsmechanismus, der durch ein auslösendes Moment bspw. die in einer Feder gespeicherte Energie schlagartig zum Bolzenantrieb freigibt und den Bolzen in einen verriegelten Zustand überführt. Zum wieder Lösen der Bolzenverbindung bedarf es jedoch eines äußeren mechanischen Krafteintrages um den Bolzen in seine Ausgangsstellung entgegen der Federkraft zurückzuführen. Besteht der Wunsch nach zeitlich sehr schnelle erfolgenden Verriegelungs- und Entriegelungsvorgängen, die vergleichbar explosionsartig, d. h. sehr kurzzeitig von statten gehen, so sind enorme technische Aufwendungen zu treffen, bisher bekannte für die Linearbeweglichkeit eines vorstehenden Bolzens erforderliche Aktorsysteme entsprechend zu modifizieren. Im Falle eines motorisch angetriebenen Bolzens sind sehr hohe Anforderungen an die Ansprechzeit und das Drehmomentvermögen derartiger Motoren zu stellen, Anforderungen, die bei Elektromotoren rasch zu technologischen Grenzen führen. Bedient man sich hingegen entsprechend stark ausgelegter Energiespeichersysteme, wie bspw. robust ausgebildete Federsysteme, die über große Federhärten verfügen, so sind entsprechend hohe Rückstellkräfte erforderlich, um die Verriegelungsbolzen entgegen der Federkraft wieder erneut zu spannen.

In der DE 44 06 771 A1 ist ein Greifersystem für einen Industrieroboterarm beschrieben, das gemäß Ausführungsbeispiel in Fig. 6 über einen Kniehebelmechanismus verfügt, wobei die Auslenkung des Kniehebels durch die Einstellung eines Kräftegleichgewichtes zwischen der Rückstellfeder und dem aus Wandlerwerkstoff bestehende Draht realisiert wird. Sowohl der aus Wandlerwerkstoff bestehende Draht als auch die Rückstellfeder sind dauerhaft an den Kniehebelmechanismus und somit an dem auszulenkenden Mittel angelenkt. Die Vorrichtung dient ausschließlich zum Ergreifen von Gegenständen.

Aus der US 5,070,697 ist ein Stellmittel zu entnehmen, an dem einerseits ständig die Federkraft einer Feder als auch die Auslenkungskraft einer Vielzahl miteinander in Serie geschaltete, jeweils aus Wandlerwerkstoff gefertigte Federn angreifen.

### Darstellung der Erfindung

Der Erfindung liegt die Aufgabe zugrunde, einen Mechanismus zu schaffen, mit dem eine bidirektionale Auslenkung eines Mittels längs einer Führung möglich wird, das vorzugsweise zu Zwecken einer lösbarfesten Verriegelung zwischen zwei Komponenten dient. Die Auslenkung des Mittels sowohl in die eine als auch in die entgegengesetzte Richtung längs der Führung sollte möglichst schnell und kurzfristig erfolgen, wobei der hierfür erforderliche technische Aufwand möglichst gering und gewichtssparend sein sollte. Die das Mittel jeweils längs der Führung in entgegengesetzte Richtungen auslenkenden Aktoren sollen insbesondere über eine hohe Funktionszuverlässigkeit verfügen, so dass ihr Einsatz in sicherheitsrelevanten Systemen, wie bspw. die lösbarfeste Verriegelung bei Personenschutzsystemen, sei es im Personentransportwesen oder in beliebigen Bereichen, in denen es vornehmlich um den Schutz von Personen geht, einsetzbar ist.

Eine lösungsgemäße Vorrichtung ist im Anspruch 1 angegeben. Die Vorrichtung vorteilhaft weiterbildende Merkmale sind Gegenstand der Unteransprüche sowie insbesondere der Beschreibung unter Bezugnahme auf die Ausführungsbeispiele zu entnehmen.

Lösungsgemäß sieht eine Vorrichtung für eine bidirektionale Auslenkung eines Mittels oder eines Anschlusselementes, nachfolgend als Mittel bezeichnet, längs einer Führung, das reversibel zwischen wenigstens zwei Positionen längs der Führung bewegbar ist, ein Antriebsmittel vor, das mit dem Mittel in Wirkverbindung bringbar ist, das längs der Führung das Mittel kraftbeaufschlagt in eine Richtung auszulenken vermag sowie ein mit dem Mittel in Wirkverbindung stehender Aktor, der das Mittel in die entgegengesetzte Richtung längs der Führung kraftbeaufschlagt auszulenken vermag, wobei der Aktor mittels eines Wandlerwerkstoffes betätigbar ist. Das Mittel ist dabei als ein entriegelbares Verriegelungselement zum lösbar festen Verriegeln ausgebildet ist.

Wandlerwerkstoffe, insbesondere multifunktionale Festkörperwandlerwerkstoffe, sind bspw. piezokeramische, elektro- oder magnetrostriktive Materialien, die unter dem Einfluss eines gut steuerbaren magnetischen oder elektrischen Feldes, das zumeist zu einer Temperaturerhöhung, führt eine Zustands- oder Formänderung erfahren, die als Weg- oder Kraftwirkung gezielt genutzt werden kann. Der multifunktionale Werkstoff-spezifische Prozess zeichnet sich durch eine sehr hohe Dynamik, mechanische Verschleißfreiheit und Stellgenauigkeit aus und kann im Rahmen eines geeignet ausgebildeten Aktors zu einer Längen- oder Kraftänderung genutzt werden, ähnlich dem Aufbau einer Belastungseinheit unter Nutzung eines servohydraulischen Aktorprinzips.

Eben dieser den Wandlerwerkstoffen innenliegende Wirkmechanismus wird zur gezielten Auslenkung des längs einer Führung beweglich gelagerten Mittels in der lösungsgemäß ausgebildeten Vorrichtung genutzt. Die Vorrichtung sieht jedoch neben dem wenigstens teilweise aus einem Wandlerwerkstoff bestehenden Aktor ein weiteres Antriebsmittel vor, das in einer einfachsten Ausführungsform als Energiespeicher in Form einer Zug- oder Druckfeder ausgebildet ist und derart mit dem Mittel in Wirkverbindung bringbar ist, dass das Antriebsmittel das längs der Führung gelagerte Mittel in die entgegengesetzte Wirkrichtung auszulenken vermag zu jener, mit der das Mittel durch die Wandlerwerkstoff unterstützte Aktoreinheit ausgelenkt wird.

Die Vorrichtung dient zur Ver- und Entriegelung zwischen zwei beweglich zueinander gelagerten Komponenten, bei der der Verriegelungsvorgang durch eine zwangsgeführte Bewegung längs der Führung in eine Richtung erfolgt und der Entriegelungsvorgang durch eine entsprechend zwangsgeführte Bewegung des Mittels in die entgegengesetzte Richtung. Je nach Anwendungsfall und konstruktiver Ausgestaltung der Vorrichtung ist es möglich den Wandlerwerkstoff aufweisenden Aktor oder das als Energiespeicher ausgebildete Antriebsmittel entweder für den Verriegelungs- oder den Entriegelungsvorgang einzusetzen.

Bevorzugte Anwendungsgebiete der lösungsgemäßen Anordnung sind z.B. im Bereich des Kraftfahrzeugbaus zu sehen, insbesondere im Zusammenhang mit der Verbesserung des Personenschutzes bei Unfall- oder Crashsituationen. So vermag die lösungsgemäße Vorrichtung zur gegenseitigen Verriegelung einzelner Bereiche der Fahrzeugstruktur beizutragen oder die Bewegung einzelner Fahrzeugkomponenten zu initiieren, wie bspw. Fahrzeugsitze aus einer Arbeitsposition in eine andere Arbeitsposition zu bewegen, in der bspw. der Fahrzeugsitz entsprechend zu arretieren ist. Auch sind automotive oder nichtautomotive Anwendungen der lösungsgemäßen Vorrichtung denkbar, bei denen einzelne Komponenten vorzugsweise weich und reversibel, d. h. zerstörungsfrei verriegelt werden sollen.

Eine besonders vorteilhafte Variante eines Aktors, der in der vorstehend skizzierten lösungsgemäßen Vorrichtung zur Auslenkung des Mittels längs der Führung dient, ist in Art eines Kniehebels ausgebildet, der wenigstens zwei Kniehebelschenkel vorsieht, die über eine Gelenkachse drehbar miteinander verbunden sind. Die der Gelenkachse gegenüberliegenden Endbereiche der Kniehebelschenkel sind mit den Enden eines einstückig drahtförmigen Wandlerwerkstoffes verbunden, vorzugsweise in Form eines aus Formgedächtnismetall geformten Drahtes, der über eine Geometrieform im Bereich der Gelenkachse geführt ist und somit einen radialen Abstand zur Gelenkachse aufweist. Vorzugsweise ist die Geometrieform als eine Kreisscheibe ausgebildet, deren Kreismittelpunkt mit der Gelenkachse zusammenfällt und längs deren Umfangsperipherie der Draht aus Wandlerwerkstoff wenigstens bereichsweise geführt ist. Wird der Wandlerwerkstoff aktiviert, bspw. im Wege einer Bestromung oder Erwärmung, so erfährt er eine Kürzung in Längsrichtung, wodurch die Kniehebelendbereiche voneinander gespreizt werden. Weitere Einzelheiten hierzu können der Beschreibung unter Bezugnahme auf die Ausführungsbeispiele entnommen werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Schematisierte Sequenzbilddarstellungen zur bidirektionalen Auslenkung eines Mittels,
- Fig. 2: Längsschnittdarstellung durch eine lösungsgemäß ausgebildete Vorrichtung zur bidirektionalen Auslenkung eines Mittels,
- Fig. 3a und b: perspektivische Detaildarstellungen eines als Verriegelungselement ausgebildeten Mittels im entriegelten (a) und verriegelten (b) Zustand sowie
- Fig. 4a: perspektivische Schnittsdarstellung eines Verriegelungselementes im entriegelten Zustand,
- Fig. 4b: perspektivische Ausschnittsdarstellung eines Verriegelungselementes im verriegelten Zustand,
- Fig. 5a, b: schematisierte Darstellungen zu einem als Kniehebel ausgebildeten Aktor.

### Wege zur Ausführung der Erfindung, gewerbliche Verwendbarkeit

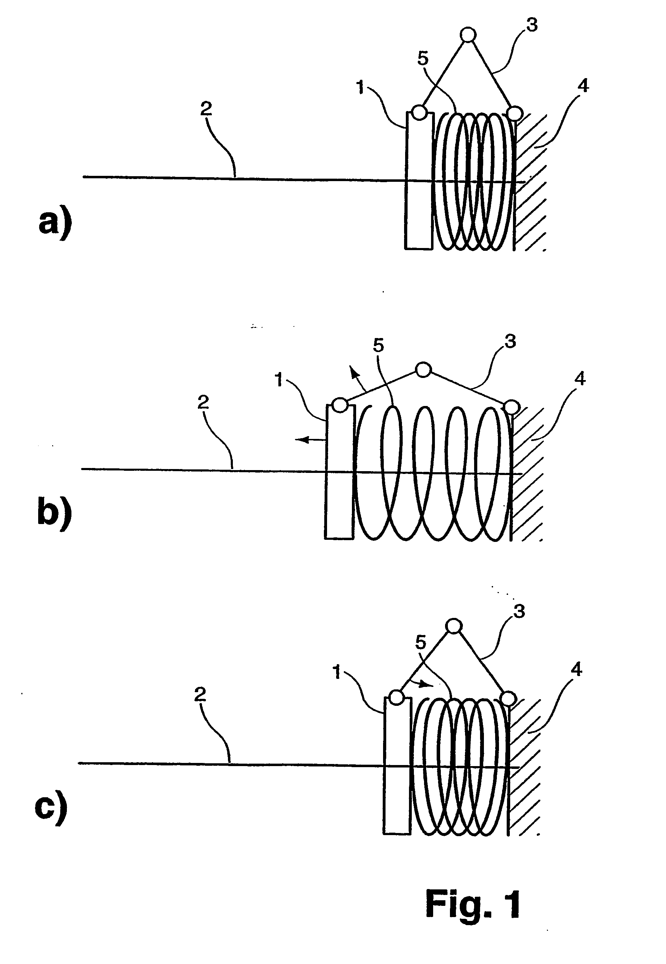

In den Sequenzbilddarstellungen gemäß der Figuren 1a-c ist stark schematisiert eine lösungsgemäß ausgebildete Vorrichtung für eine bidirektionale Auslenkung eines Mittels 1 längs einer Führung 2 dargestellt, wobei die Führung 2 als Linearführung angenommen sei und das Mittel 1 über einen als Kniehebel ausgebildeten Aktor 3 mit einem festen Gegenlager 4 verbunden ist. Zwischen dem als mechanische Abstützung dienenden Gegenlager 4 und dem längs der Führung 2 beweglich angeordneten Mittel 1 ist ein Antriebsmittel 5 vorgesehen, das als Energiespeicher im einfachsten Fall als Federelement ausgebildet ist. Selbstverständlich ist es möglich das Antriebsmittel als pneumatisch oder hydraulisch wirkenden Energiespeicher auszubilden.

In der Bildsequenz gemäß Figur 1a sei angenommen, dass das Antriebsmittel 5, d.h. das Federelement, einen komprimierten Zustand einnimmt, wobei ein nicht weiter dargestellter Haltemechanismus das Mittel 1 entgegen der Federkraft des Federelementes 5 in der in Figur 1a dargestellten rechten Position hält. Wird der Haltemechanismus ausgelöst so bewegt sich das Mittel 1 längs der als Linearachse ausgebildeten Führung 2 federkraftbeaufschlagt nach links, wobei zugleich der als Kniehebel ausgebildete Aktor 3 in der dargestellten Weise aufgespreizt wird. Um nach erfolgter Expansion des als Federelement ausgebildeten Antriebsmittels 5, das Mittel 1 aus der ausgelenkten linken Position wieder in den in Figur 1a dargestellten Ausgangszustand zurückzuführen, ist der als Kniehebel ausgebildete Aktor 3 zumindest teilweise aus einem multifunktionalen Wandlerwerkstoff ausgebildet, oder enthält zumindest Komponenten aus einem entsprechenden Wandlerwerkstoff, vorzugsweise aus einer Formgedächtnismetalllegierung (SMA). Durch geeignete Aktivierung der aus Wandlerwerkstoff bestehenden Aktorbereiche oder -elemente wird ein Spreizen beider Schenkel des Kniehebels 3 entgegen der zwischen dem Mittel 1 und dem mechanischen Anschlag 4 wirkenden Federkraft des Antriebsmittels 5 initiiert.

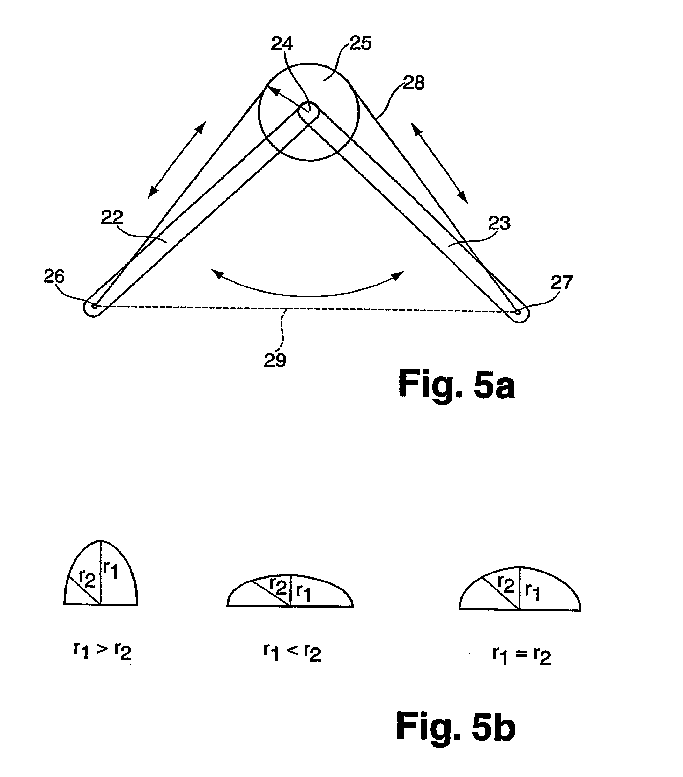

Eine mögliche Ausbildungsvariante eines derartigen Kniehebelmechanismus ist im Weiteren unter Bezugnahme auf Figur 5 näher erläutert.

Alternativ zu dem in den Figuren 1a-c erläuterten Wirkmechanismus zur bidirektionalen Auslenkung des Mittels 1 längs der Linearführung 2 durch kombiniertes Zusammenwirken eines konventionellen Energiespeichers, vorzugsweise in Form eines Federelementes und einem wenigstens in Teilbereichen aus einem Wandlerwerkstoff bestehenden Aktors ist es ebenso auch möglich die Überführung des Mittels 1 aus der in Figur 1a dargestellten Position in die nach links ausgelenkte Position gemäß Figur 1b mittels gezielter kraftvermittelnder Spreizung des Aktors 3 zu initiieren, wobei das Federelement in einen gespannten Zustand überführt wird. Zur Rückstellung des ausgelenkten Mittels 1 in die Ausgangsposition dient die rückstellende Federkraft, wobei der im Aktor 3 vorgesehene Wandlerwerkstoff deaktiviert wird und somit die aktorbedingte Kraftwirkung zum Erliegen kommt.

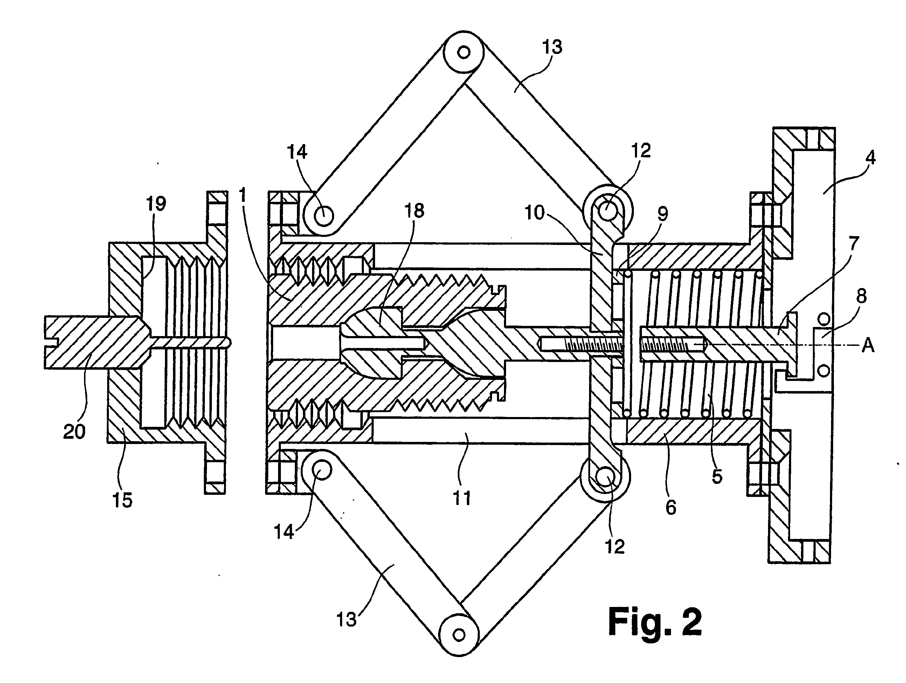

Das vorstehend beschriebene Wirkprinzip dient in einer besonders bevorzugten Anwendung zur lösbarfesten Verriegelung und Entriegelung zwischen zwei Komponenten. Hierzu sei im Weiteren auf die im Längsschnitt dargerstellte Verriegelungsvorrichtung in Figur 2 verwiesen.
Als mechanisches festes Gegenlager 4 dient bspw. eine stabile Unterkonstruktion einer ersten Komponente, die, um ein konkretes Anwendungsbeispiel aus dem Kraftfahrzeugbereich zu nennen, als stabile Karosserierahmenstruktur ausgebildet ist. An dem festen Gegenlager 4 ist eine hohlzylinderförmig ausgebildete Gehäusestruktur 6 befestigt, die eine Mittenachse A umschließt, längs der wie im Weiteren gezeigt wird, das als Verriegelungselement ausgebildete Mittel 1 linear geführt wird.

Innwandig innerhalb der zylinderförmig ausgebildeten Gehäusestruktur 6 ist eine als Antriebsmittel 5 dienende Druckfeder vorgesehen, die von einem Haltepin 7, der mit einem Haltefinger 8 in Eingriff steht, in einem vorgespannten Zustand gehalten wird. Der Haltefinger 8 wird vorzugsweise ebenfalls mittels eines aus Formgedächtnismetall bestehenden Drahtes in einem mit dem Haltepin 7 in Eingriff stehenden Zustand gehalten und per Aktivierung des Wandlerwerkstoffes vom Haltepin 7 gelöst, so dass die Federenergie der Druckfeder 5 freigegeben wird, wobei sich die Feder längs der Mittenachse A in der vom mechanischen Gegenlager 4 abgewandten Richtung zu entspannen vermag.

Hierbei tritt das sich entspannende Federelement 5 in Wirkverbindung mit einer Prallplatte 9, die mit einem Abstützelement 10 verbunden ist, das beidseitig die Gehäusestruktur 6 durch einen innerhalb der Gehäusestruktur 6 eingebrachten Schlitz überragt. An den die Gehäusestruktur 6 überragenden Enden des Abstützelementes 10 ist jeweils ein Endgelenk 12 eines zweischenkeligen Kniehebels 13, der jeweils als Aktor 3 dient, drehbeweglich angelenkt. Das jeweils andere Endgelenk 14 des zweischenkeligen Kniehebels 13 ist drehbeweglich, aber ortsfest an der Gehäusestruktur 6 in einem dem festen Gegenlager 4 abgewandten Bereich angelenkt. Bereits aus diesen konstruktiven Vorgaben ergibt sich, dass bei Entspannung des Federelementes 5 der Kniehebel 13 durch die nach links zwangsgeführte Bewegung der Prallplatte 9 sowie des Abstützelementes 10 in eine geschlossene Stellung übergeführt wird. Hierbei wird das Endgelenk 12 längs der Mittenachse A in Richtung des relativ zur Mittenachse A ruhenden Endgelenkes 14 verschoben.
Zur Rückstellung des entspannten Federelementes 5 gilt es den Kniehebel 13 entsprechend zu aktivieren, der durch Abstützung am Endlager 14 gegen die Federkraft des Federelementes 5 gespreizt wird und das Federelement in einen gespannten Zustand überzuführen vermag. Hierzu dient ein Draht aus SMA (Formgedächtnismaterial), dessen aktivierbare Längenänderungseigenschaften genutzt werden, den Kniehebel 13 zu öffnen. Ist der Ausgangszustand erreicht, so rastet der Haltefinger 8 in einer den Haltepin 7 haltenden Position mittels einer Arretierung ein.

Zur Realisierung einer Verriegelungsfunktion ist das unter Bezugnahme auf die Figuren 1 mit dem Bezugszeichen 1 eingeführte Mittel als Verriegelungselement auszuführen. Bezugnehmend auf das in Figur 2 dargestellte Ausführungsbeispiel ist das als Verriegelungsmittel ausgebildete Mittel1 mit dem Abstützelement 10 verbunden, so dass bei Auslenkung des Abstützelements 10, wie vorstehend beschrieben, zugleich auch das Verriegelungselement 1 bewegt wird.

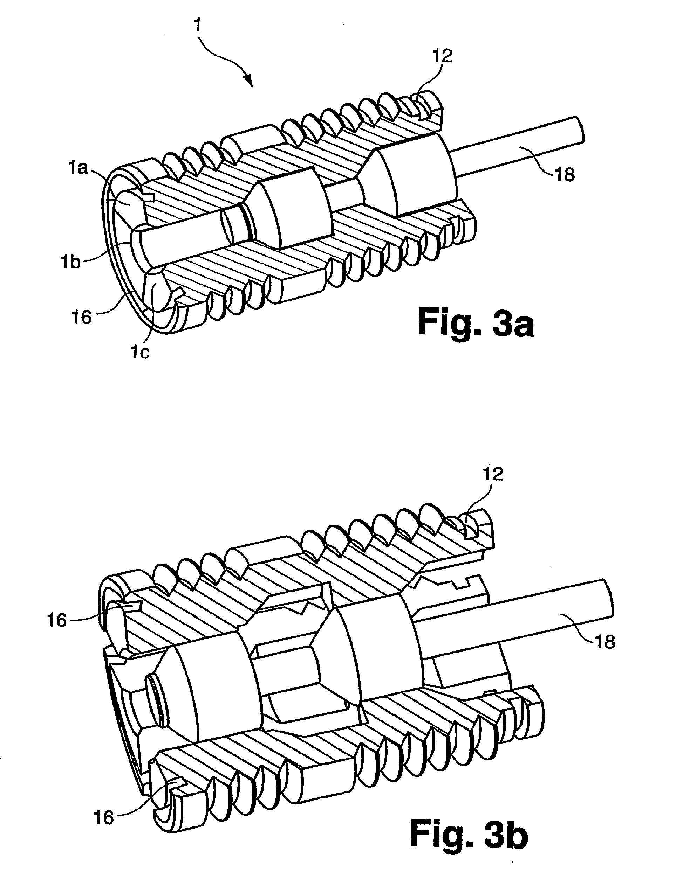

Das dem Verriegelungsmechanismus zugrunde liegende Wirkprinzip basiert darauf, dass das als Verriegelungselement ausgebildete Mittel 1 in einer ersten Position, die in Figur 2 dargestellt ist und in der das Federelement 5 einen gespannten Zustand einnimmt, vollständig innerhalb der zylinderförmig ausgebildeten Gehäusestruktur 6 positioniert ist. Axial der Gehäusestruktur 6 beabstandet gegenüberliegend angeordnet ist eine ebenso zylinderförmig ausgebildete Gegengehäusestruktur 15 vorgesehen, die bspw. im Bereich einer Kraftfahrzeugtür integriert ist. Durch Auslösung des Haltefingers 8 und anschließend erfolgender Entspannung des Federelementes 5 tritt das Verriegelungselement 1 aus der zylinderartig ausgebildeten Gehäusestruktur 6 längs der Mittenachse A nach links aus (gemäß Bilddarstellung in Figur 2) und mündet in das Innere der zylinderförmig ausgebildeten Gegengehäusestruktur 15 ein. Zugleich erfährt das Verriegelungselement 1 eine radiale Spreizung auf die unter Bezugnahme auf Figur 3 noch im Einzelnen eingegangen wird, wodurch das sich radial aufweitende Verriegelungselement 1 in Wirkverbindung mit der Innenkontur sowohl der Gehäusestruktur 6 als auch der Gegengehäusestruktur 15 tritt. Wie aus dem Ausführungsbeispiel gemäß Figur 2 ersichtlich, sind die Innenkonturen der Gehäusestruktur 6 sowie Gegengehäusestruktur 15 in Bereichen, in denen sie mit dem Verriegelungselement 1 in Wirkverbindung treten, zackenartig strukturiert ausgebildet. Gleichsam verfügt das Verriegelungselement 1 jeweils über eine gegenkonturiert ausgebildete zackenförmige Außenwandung, so dass im Verriegelungszustand das sich radial aufgeweitete Verriegelungselemente 1 innig mit den Innenkonturen der Gehäusestruktur 6 und der Gegengehäusestruktur 15 zu verkrallen vermag. Auf diese Weise werden die Gegengehäusestruktur 15 und die Gehäusestruktur 6 längs der Mittenachse A fest gegeneinander verriegelt.

Zur besseren Veranschaulichung des Vorganges der Spreizung des Verriegelungselementes 1 sei auf die Figuren 3a und b verwiesen. In Figur 3a ist das Verriegelungselement 1 im nicht gespreizten Zustand dargestellt, gleichsam dem Zustand, der in Figur 2 gezeigt ist. Das Verriegelungselement 1 ist in dem gezeigten Ausführungsbeispiel in 4 Segmente 1a, 1b, 1c, 1 d(nicht gezeigt) aufgeteilt, die in dem in Figur 3a dargestellten zusammengefügten Zustand ein zylinderförmiges Verriegelungselement ergeben (lediglich zur besseren Veranschaulichung des Aufbaus des Verriegelungselementes 1 ist ein Verriegelungssegment 1d weggelassen worden). Alle vier Segmente des Verriegelungselementes 1 werden mittels in der Figur nicht dargestellte Gummiringe radial zusammengehalten, die jeweils in die Aufnahmenuten 16 und 17 einlegbar sind. Innenliegend zum Verriegelungselement 1 ist ein Spreizbolzen 18 vorgesehen, der bei entsprechender axialer Auslenkung die vier Segmente 1a, 1b, 1c, 1d des Verriegelungselementes 1 radial nach außen zu spreizen vermag. Der gespreizte Zustand ist in der Bilddarstellung gemäß Figur 3b dargestellt. Anhand der Innenkonturierung sowohl jedes einzelnen Segmentes 1a, 1b, 1c, 1d des Verriegelungselementes 1 als auch der Außenkonturierung des Spreizbolzens 18, der innenliegend relativ zum Verriegelungselement 1 längs der Mittenachse A nach links vorgeschoben ist, kann die Spreizwirkung ersehen werden.

Wird somit das in vier Segmente unterteilte Verriegelungselement 1 vermittels Federkraft in den Bereich der Gegengehäusestruktur 15 verschoben, so gelangt das Verriegelungselement 1 in Eingriff mit der axial ausgerichteten Anschlagfläche 19 innerhalb der Gegengehäusestruktur 15 (siehe Figur 2), zugleich tritt ein mit der Gegengehäusestruktur 15 verbundener Zentrierdorn 20 in eine mittige Ausnehmung innerhalb des Verriegelungselementes 1, der im Wesentlichen für eine zentrische Führung des Verriegelungselementes 1 dient. Eine weiterführende federkraftbeaufschlagte, axial gerichtete Auslenkung des Abstützelementes 10 und des mit diesem verbundenen Spreizbolzens 18 führt zu einer in der Figur 3b dargestellten Situation, in der das Verriegelungselement 1 radial aufgespreizt wird. Somit ist eine innige axiale Verriegelung zwischen der Gehäusestruktur 6 und der Gegengehäusestruktur 15 geschaffen. Gilt es den Verriegelungszustand wieder zu lösen, so bedarf es der Aktivierung des Kniehebels 13, durch den das Abstützelement 10 sowie der mit dem Abstützelement 10 verbundene Spreizbolzen 18 linear rückgeführt wird. Durch die innere Rückführung des Spreizbolzens 18 innerhalb des Verriegelungselementes 1 in eine Stellung gemäß Figur 3a werden die radial gespreizten Segmente 1a, 1b, 1c, 1d des Verriegelungselementes 1 durch die nicht dargestellten in den Aufnahmenuten 16 und 17 vorgesehenen Gummielemente in eine kompakte gegenseitig anliegende Form überführt, in der das Verriegelungselement 1 linear aus dem Bereich der Gehäusestruktur 15 zurückgeführt werden kann. Beide Komponenten sind somit wieder entriegelt.

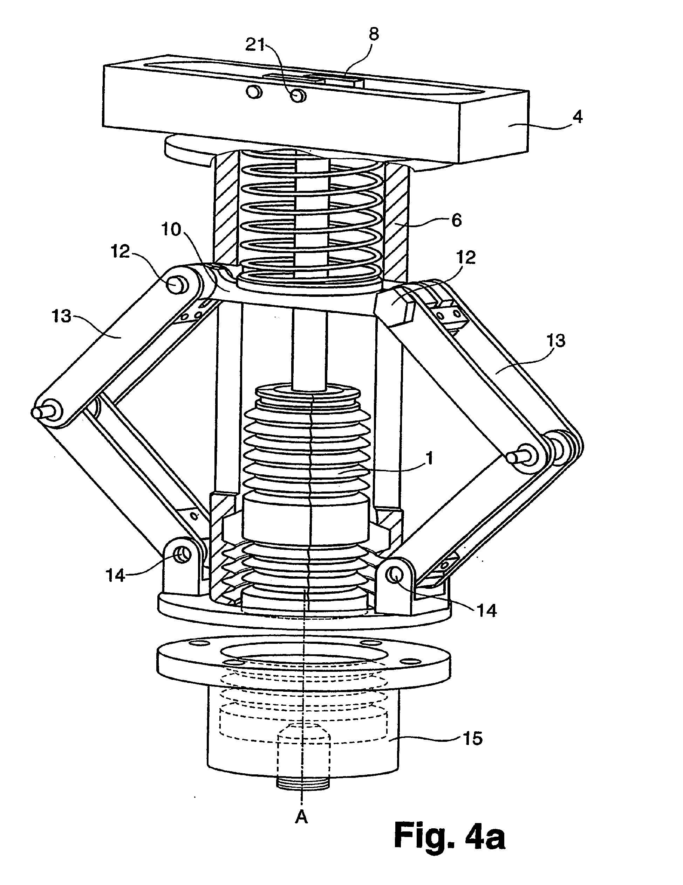

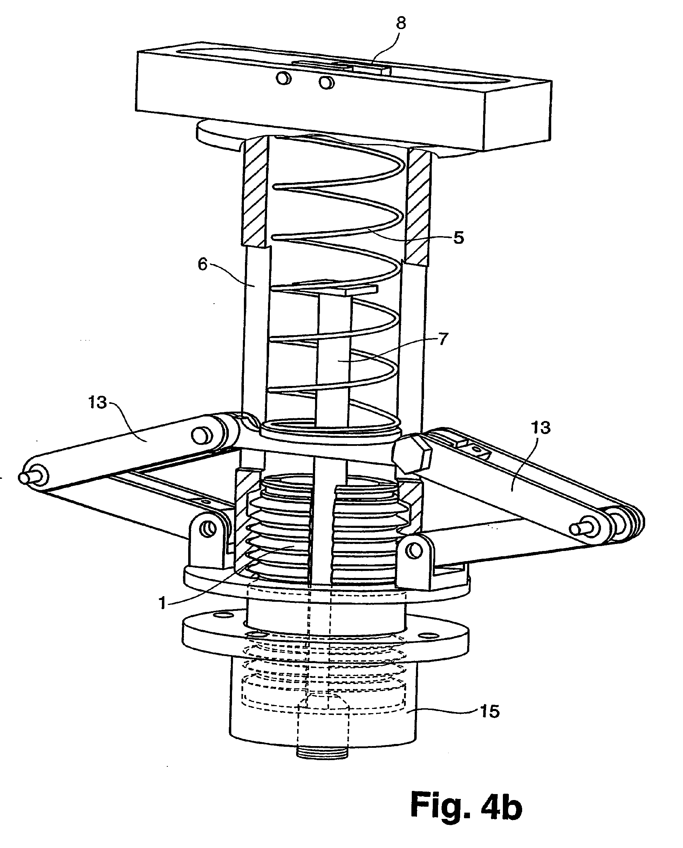

Zur weiteren Veranschaulichung des Verriegelungsmechanismus sei auf die Figuren 4a und 4b verwiesen, die die gemäß Figur 2 in Längsschnittdarstellung dargestellte Verriegelungsvorrichtung in perspektivischer Schnittdarstellung zeigen. Figur 4a stellt den Verriegelungsmechanismus im entriegelten bzw. geöffneten Zustand dar. Zu sehen ist das mechanische Gegenlager 4 in der der Haltefinger 8 eingebracht ist, der durch Formgedächtnisdrähte 21 aktivierbar ist. Am Gegenlager 4 ist die Gehäusestruktur 6 angebracht, innerhalb der längs der Mittenachse A das Federelement 5 im gespannten Zustand gehalten wird. Längs der Mittenachse A an einem die Gehäusestruktur 6 überragenden Abstützelement 10 sind jeweils die Endlager 12 der zweischenkeligen Kniehebel 13 längsbeweglich angebracht. Die gegenüberliegenden Endlager 14 der Kniehebel 13 befinden sich drehbarfest mit der Gehäusestruktur 6 verbunden. Im Inneren der Gehäusestruktur 6 befindet sich das im radial geschlossenen Zustand verharrende Verriegelungselement 1. Zentrisch der Gehäusestruktur 6 gegenüberliegend ist eine Gegengehäusestruktur 15 vorgesehen, die eine innere Ausnehmung vorsieht, in die im verriegelten Zustand das Verriegelungselement 1 eingeführt wird. In einer bevorzugten Ausführungsform gilt es die Gehäusestruktur 6 mit allen an ihr fest angelenkten Komponenten in einen stabilen Karosseriebereich eines Kraftfahrzeuges zu integrierten, wohingegen die Gehäusestruktur 15 bspw. im Bereich der Kraftfahrzeugtür eingebracht ist. In Figur 4b ist der verriegelte Zustand der Verriegelungsstruktur dargestellt, bei dem das Federelement 5 einen entspannten Zustand einnimmt. Hierbei ist der Haltepin 7 vom Haltefinger 8 gelöst worden. Der Kniehebel 13 befindet sich in einem geschlossenen Zustand und das Verriegelungselement 1 ist radialseits gespreizt (nicht sichtbar) und verriegelt die Gehäusestruktur 6 fest mit der Gehäusestruktur 15.

Zur Rückführung des Verriegelungselementes 1 in den entriegelten Zustand bedarf es einer lösungsgemäßen Aktivierung des Kniehebels 13 dergestalt, dass der Kniehebel 13 entgegen der Federkraft des Federelementes 5 kraftbeaufschlagt gespreizt wird. Hierzu weist der Kniehebel 13 lösungsgemäß einen Wandlerwerkstoff auf, der die beiden Schenkel des Kniehebels 13 kraftbeaufschlagt zu spreizen vermag. Ein derartiger Kniehebelmechanismus ist in Figur 5 schematisch dargestellt.

In Figur 5a ist eine schematisierte Darstellung eines zweischenkeligen Kniehebels 13 dargestellt, dessen beide Kniehebelschenkel 22 und 23 über ein Einachsgelenk 24 schwenkbar miteinander verbunden sind. Zentrisch zur Gelenkachse, die die Zeichenebene senkrecht schneidet, des Einachsgelenkes 24 ist eine kreisscheibenförmige Geometrieform 25 in Form einer Umlenkrolle vorgesehen, mit einem Radius r. An den Enden 26 und 27 der Kniehebelschenkel 22 und 23 sind jeweils die Endpunkte eines einstückigen, aus Formgedächtnismaterial (SMA) bestehenden Drahtes 28 fest angebracht, der im Übrigen an der peripheren Außenkontur der Umlenkrolle 25 anliegt. Der Draht 28 ist jeweils straff über die Umlenkrolle 25 gespannt und bewirkt bei einer Längenänderung eine entsprechende Spreizung der Kniehebelschenkel 22 und 23. Wird der aus Formgedächtnismaterial bestehende Draht 28 durch entsprechende Aktivierung verkürzt, so wirken aufgrund der in Figur 5a entnehmbaren Anlenkungspunkte zwischen Draht 28 und den Kniehebelschenkeln 22 und 23 jeweils ein nach außen gerichtetes Drehmoment, das die Kniehebelschenkel 22 und 23 in eine gespreizte, d. h. geöffnete Stellung überführt.

Dieser Wirkmechanismus wird gezielt genutzt, um das in dem vorstehend beschriebenen Ausführungsbeispiel mit dem Kniehebel 13 verbundene Verriegelungselement 1 aus dem verriegelten Zustand in den entriegelten Zustand entgegen der Federkraft des Federelementes 5 zurückzuführen. Grundsätzlich ist es jedoch auch möglich, den in Figur 5a prinzipiell skizziert dargestellten Kniehebelmechanismus als Aktorelement auch für beliebig andere Anwendungsfälle, in denen eine Bewegungsführung längs einer vorgegebenen Trajektorie erforderlich ist, einzusetzen.

Für das Zusammenführen bzw. Schließen beider Kniehebelschenkel 22 und 23 bedarf es eines äußeren, auf beide Kniehebelschenkel einwirkenden Krafteintrages, der im Falle des vorstehend beschriebenen Ausführungsbeispieles durch die sich entspannende Feder 5 herrührt. In Anwendungsfällen, in denen der in Figur 5a dargestellte Kniehebelmechanismus in Alleinstellung als in zwei Richtungen wirkender Aktor genutzt werden soll, ist es möglich, ein Schließen beider Kniehebelschenkel 22 und 23 mittels eines weiteren, aus Formgedächtnismaterial bestehenden Drahtes 29 (siehe gestrichelte Linie), der beide Anlenkungspunkte 26 und 27 auf direktem Weg miteinander verbindet, zu ermöglichen. In diesem Fall gilt es den zwischen den Anlenkungspunkten 26 oder 27 gespannten Draht 29 koordiniert mit der Längung des über die Umlenkrolle 25 verlaufenden Drahtes 28 entsprechend zu aktivieren. Im Falle des Schließens beider Kniehebelschenkel gilt es den über die Umlenkrolle 25 gespannten Draht 28 zu längen, wohingegen der zwischen den Anlenkungspunkten 26 und 27 vorgesehene Draht 29 entsprechend zu kürzen ist. Beide Drähte sind somit mit unterschiedlichen Energiequellen zu versorgen und entsprechend getrennt voneinander zu aktivieren.

In der Bilddarstellung gemäß Figur 5b sind unterschiedliche Umfangsgeometrien für die Geometrieform bzw. Umlenkrolle 25 dargestellt, durch die unterschiedliche Kraft-Weg-Verläufe und somit unterschiedliche Bewegungsmuster der Kniehebelenden 26 und 27 erhalten werden können. Die unterschiedlichen Geometrien unterscheiden sich durch unterschiedliche Radienverhältnisse r1 und r2, wobei r1 der senkrecht nach oben gerichtete Radius und r2 der unter einem Winkel von 45° anliegende Radius der Geometrieform entspricht.

Die erfindungsgemäße Vorrichtung unter Verwendung des vorstehend beschriebenen Kniehebelsystems ermöglicht eine Reversibilität des Verriegelungsmechanismusses und eröffnet insbesondere in der Anwendung bei Crash-Sicherheitssystemen in der Kraftfahrzeugtechnik eine hinnehmbare Akzeptanz von Fehlauslösungen entsprechender Aktorsysteme. Wird bspw. unter Verwendung sog. Pre-Crashsensoren ein zeitlich kurz bevorstehender Zusammenstoß diagnostiziert, der jedoch nicht eintritt, so wird zwar die lösungsgemäße Verriegelungsvorrichtung ausgelöst, wodurch der Personenschutz innerhalb des Kraftfahrzeuges erhöht wird, dennoch ist es möglich den Verriegelungsschutz wieder zu lösen, ohne dabei Schaden am Kraftfahrzeug selbst zu verursachen.

Werden hingegen pyrotechnische Aktoren eingesetzt, so führt die Aktivierung derartiger Aktoren unvermeidlich zu irreversiblen Deformationen am Kraftfahrzeug selbst. Dies jedoch sollte in jenen Fällen vermieden werden, in denen zwar eine Crashsituation detektiert wird aber letztlich nicht eintritt. Das erfindungsgemäße Entriegelungssystem vermag hierzu entscheidend beizutragen, die durch Fehlauslösungen verursachten Schäden gänzlich zu vermeiden.

### Bezugszeichenliste

- 1: Mittel, Verriegelungselement.
- 2: Führung, Mittenachse
- 3: Aktor
- 4: Mechanisches Gegenlager
- 5: Antriebsmittel, Federelement
- 6: Gehäusestruktur
- 7: Haltepin
- 8: Haltefinger
- 9: Prallplatte
- 10: Abstützelement
- 11: Ausnehmung
- 12: Endlager
- 13: Kniehebel
- 14: Endlager
- 15: Gehäusestruktur
- 16, 17: Aufnahmenut
- 18: Spreizbolzen
- 19: Gegenanschlagsfläche
- 20: Zentrierdorn
- 21: Draht aus Formgedächtnismetall
- 22, 23: Kniehebelschenkel
- 24: Drehgelenk
- 25: Geometrieform, Umlenkrolle
- 26, 27: Endbereiche der Kniehebelschenkel, Anlenkungspunkte
- 28: Draht aus SMA
- 29: Draht aus SMA

## Patentansprüche

1. Vorrichtung mit einem Mittel (1) und einer Führung (2), längs der das Mittel (1) reversibel bidirektional zwischen wenigstens zwei Positionen auslenkbar ist, einem mit dem Mittel (1) in Wirkverbindung bringbaren Antriebsmittel (5), das längs der Führung (2) das Mittel (1) kraftbeauschlagt in eine Richtung auszulenken vermag, sowie einem mit dem Mittel (1) in Wirkverbindung stehenden Aktor (3), der das Mittel (1) in die entgegengesetzte Richtung längs der Führung (2) kraftbeaufschlagt auszulenken vermag, wobei zur Betätigung des Aktors (3) ein Wandlerwerkstoff vorgesehen ist,
**dadurch gekennzeichnet, dass** das Mittel (1) als ein entriegelbares Verriegelungselement zum lösbar festen Verriegeln ausgebildet ist.

2. Vorrichtung nach Anspruch 1, **dadurch gekennzeichnet, dass** die Führung (2) als Linearachse ausgebildet ist oder eine gekrümmte Trajektorie vorgibt.

3. Vorrichtung nach Anspruch 1 oder 2,
**dadurch gekennzeichnet, dass** das Antriebsmittel (5) als Energiespeicher ausgebildet ist.

4. Vorrichtung nach Anspruch 3,
**dadurch gekennzeichnet, dass** der Energiespeicher ein mechanischer, pneumatischer oder hydraulischer Energiespeicher ist.

5. Vorrichtung nach Anspruch 3 oder 4,
**dadurch gekennzeichnet, dass** der Energiespeicher eine Zug- oder Druckfeder (5) ist.

6. Vorrichtung nach einem der Ansprüche 1 bis 5,
**dadurch gekennzeichnet, dass** der Energiespeicher mittels eines Wandlerwerkstoffes aktivierbar ist und seine Energie freisetzt.

7. Vorrichtung nach einem der Ansprüche 1, 2 oder 6,
**dadurch gekennzeichnet, dass** das Antriebsmittel (5) einen Wandlerwerkstoff aufweist.

8. Vorrichtung nach einem der Ansprüche 1 bis 7,
**dadurch gekennzeichnet, dass** der Aktor (3) wenigstens einen mindestens zweischenkeligen Kniehebel (13) mit jeweils mindestens einem Knick- und zwei Endgelenken (26, 27) aufweist,
von denen ein Endgelenk (26) mit dem auszulenkenden Mittel (1) und das andere Endgelenk (27) an einem festen Gegenlager längs der Führung (2) angelenkt sind, und
dass der Kniehebel (13) vermittels eines Wandlerwerkstoffes spreizbar oder schließbar ist.

9. Vorrichtung nach Anspruch 8,
**dadurch gekennzeichnet, dass** der Wandlerwerkstoff ein Formgedächtniselement, insbesondere eine SMA-Draht ist, der längs der Schenkel des Kniehebels verläuft und an dem mindestens einem Knick- und den Endgelenken derart angelenkt ist, dass das Formgedächtniselement bei Aktivierung den Kniehebel betätigt.

10. Vorrichtung nach einem der Ansprüche 1 bis 9,
**dadurch gekennzeichnet, dass** das Antriebsmittel (5) einerseits an einem festen Gegenlager längs der Führung (2) angelenkt ist und bei Aktivierung in Wirkung mit dem Mittel (1) tritt.

11. Vorrichtung nach Anspruch 8 oder 10
**dadurch gekennzeichnet, dass** das Gegenlager (4) an dem der Aktor (3) einseitig befestigt ist und das Gegenlager, an dem das Antriebsmittel (5) angelenkt ist, über eine gemeinsame mechanische Struktur verbunden sind.

12. Vorrichtung nach Anspruch einem der Ansprüche 1 bis 11,
**dadurch gekennzeichnet, dass** das als entriegelbares Verriegelungselement (1) ausgebildete Mittel zum Verriegeln zweier Komponenten ausgebildet ist, das im entriegelten Zustand über den Aktor (3) und den Energiespeicher mit der einen Komponente verbunden ist,
dass das Verriegelungselement (1) in einer ersten Position längs der Führung (2) einen entriegelten Zustand einnimmt, und
dass längs der Führung (2) in einer zweiten Position ein zweites Mittel vorgesehen ist, mit dem das Verriegelungselement (1) bei Auslenkung in die zweite Position eine lösbar feste Wirkverbindung eingeht.

13. Vorrichtung nach einem der Ansprüche 1 bis 12,
**dadurch gekennzeichnet, dass** das Verriegelungselement (1) wenigstens zwei radial zur Führung bewegbare Segmente (1a, 1b, 1c) aufweist,
dass das zweite Mittel ein Keilelement sowie ein das Keilelement radial umgebendes Gehäuseteil vorsieht,
dass bei Auslenkung des Verriegelungselementes (1) in die zweite Position die Segmente (1a, 1b, 1c) vermittels des Keilelementes radial nach außen treibbar sind, so dass die Segmente (1a, 1b, 1c) eine Klemmverbindung mit dem die Segmente radial umgebende Gehäuseteil eingehen.

14. Vorrichtung nach Anspruch 13,
**dadurch gekennzeichnet, dass** die Segmente (1a, 1b, 1c) ein Rückstellelement vorsehen, das die radial nach aussen ausgelenkten Segmente selbsttätig in eine radial innere Stellung zurückführen, sofern das Keilelement nicht mit dem Verriegelungselement (1) in Wirkverbindung tritt.

15. Vorrichtung nach Anspruch 7,
**dadurch gekennzeichnet, dass** der Wandlerwerkstoff SMA ist.

16. Verwendung der Vorrichtung nach einem der Ansprüche 1 bis 14 zur zur lösbaren Verriegelung von KfZ-Komponenten, insbesondere Kfz-Türen mit der stabilen KfZ- Karosserie im Kollisionsfall.

## Claims

1. A device having a means (1) and a guide (2), along which the means (1) is reversibly bidirectionally deflectable between at least two positions, a drive means (5), which can be operationally linked to the means (1), and which is capable of deflecting the means (1) by application of force in one direction along the guide (2), and an actuator (3), which is operationally linked to the means (1), and which is capable of deflecting the means (1) by application of force in the opposite direction along the guide (2), a converter material being provided for the actuation of the actuator (3),
**characterized in that** the means (1) is implemented as a locking element, which can be unlocked, for fixed locking which can be disengaged.

2. The device according to Claim 1,
**characterized in that** the guide (2) is implemented as a linear axis or predefines a curved trajectory.

3. The device according to Claim 1 or 2,
**characterized in that** the drive means (5) is implemented as an energy accumulator.

4. The device according to Claim 3,
**characterized in that** the energy accumulator is a mechanical, pneumatic, or hydraulic energy accumulator.

5. The device according to Claim 3 or 4,
**characterized in that** the energy accumulator is a tension or compression spring (5).

6. The device according to one of Claims 1 to 5,
**characterized in that** the energy accumulator is activatable using a converter material and releases its energy.

7. The device according to one of Claims 1, 2, or 6,
**characterized in that** the drive means (5) comprises a converter material.

8. The device according to one of Claims 1 to 7,
**characterized in that** the actuator (3) comprises at least one toggle lever (13), having at least two legs, and having at least one articulated joint and two end joints (26, 27),
of which one end joint (26) is linked to the means (1) to be deflected and the other end joint (27) is linked to a fixed counter bearing along the guide (2), and the toggle lever (13) can be spread or closed by means of a converter material.

9. The device according to Claim 8,
**characterized in that** the converter material is a shape-memory element, in particular an SMA wire, which runs along the legs of the toggle lever and on which at least one buckle joint and the end joints are linked such that the shape-memory element actuates the toggle lever upon activation.

10. The device according to one of Claims 1 to 9,
**characterized in that** the drive means (5) is linked on one side on a fixed counter bearing along the guide (2) and interacts with the means (1) upon activation.

11. The device according to Claim 8 or 10,
**characterized in that** the counter bearing (4), to which the actuator (3) is fastened on one side, and the counter bearing, to which the drive means (5) is linked, are connected via a common mechanical structure.

12. The device according to one of Claims 1 to 11,
**characterized in that** the means implemented as a locking element (1) which can be unlocked is implemented for locking two components, and is connected in the unlocked state via the actuator (3) and the energy accumulator to one of the components,
the locking element (1) assumes an unlocked state in a first position along the guide (2), and
a second means is provided along the guide (2) in a second position, with which the locking element (1) forms a fixed operational link, which can be disengaged, upon deflection into the second position.

13. The device according to one of Claims 1 to 12,
**characterized in that** the locking element (1) has at least two segments (1a, 1b, 1c) movable radially to the guide,
the second means provides a wedge element and a housing part which radially encloses the wedge element,
upon deflection of the locking element (1) into the second position, the segments (1a, 1b, 1c) can be driven radially outward by means of the wedge element, so that the segments (1a, 1b, 1c) form a clamp connection with the housing part radially enclosing the segments.

14. The device according to Claim 13,
**characterized in that** the segments (1a, 1b, 1c) provide a restoring element, which automatically returns the segments deflected radially outward into a radially inner position, if the wedge element is not operationally linked to the locking element (1).

15. The device according to Claim 7,
**characterized in that** the converter material is SMA.

16. A use of the device according to one of Claims 1 to 14 for the locking, which can be disengaged, of motor vehicle components, in particular motor vehicle doors with the stable motor vehicle body in case of collision.

## Revendications

1. Dispositif comprenant un moyen (1) et un guide (2), le long duquel le moyen (1) peut être dévié de manière bidirectionnelle réversible entre au moins deux positions, un moyen d'entraînement (5) pouvant être mis en liaison fonctionnelle avec le moyen (1), lequel est capable de dévier le moyen (1) dans une direction le long du guide (2) en étant alimenté par une force, ainsi qu'un actionneur (3) en liaison fonctionnelle avec le moyen (1), lequel est capable de dévier le moyen (1) dans la direction opposée le long du guide (2) en étant alimenté par une force, sachant que pour actionner l'actionneur (3), un matériau convertisseur est prévu,
**caractérisé en ce que** le moyen (1) est formé comme un élément de verrouillage pouvant être déverrouillé pour un verrouillage fixe séparable.

2. Dispositif selon la revendication 1,
**caractérisé en ce que** le guide (2) est formé comme un axe linéaire ou fixe une trajectoire courbe.

3. Dispositif selon la revendication 1 ou 2,
**caractérisé en ce que** le moyen d'entraînement (5) est formé comme un accumulateur d'énergie.

4. Dispositif selon la revendication 3,
**caractérisé en ce que** l'accumulateur d'énergie est un accumulateur d'énergie mécanique, pneumatique ou hydraulique.

5. Dispositif selon la revendication 3 ou 4,
**caractérisé en ce que** l'accumulateur d'énergie est un ressort de traction ou de pression (5).

6. Dispositif selon l'une des revendications 1 à 5,
**caractérisé en ce que** l'accumulateur d'énergie peut être activé au moyen d'un matériau convertisseur et libère son énergie.

7. Dispositif selon l'une des revendications 1, 2 ou 6,
**caractérisé en ce que** le moyen d'entraînement (5) présente un matériau convertisseur.

8. Dispositif selon l'une des revendications 1, à 7,
**caractérisé en ce que** l'actionneur (3) présente au moins une genouillère (13) ayant au moins deux branches comprenant respectivement au moins une articulation de genouillère et deux articulations d'extrémité (26, 27),
desquelles une articulation d'extrémité (26) est articulée avec le moyen (1) à dévier et l'autre articulation (27) est articulée sur un contre-palier fixe le long du guide (2) et
**en ce que** la genouillère (13) peut être déployée ou fermée au moyen d'un matériau convertisseur.

9. Dispositif selon la revendication 8,
**caractérisé en ce que** le matériau convertisseur est un élément à mémoire de forme, en particulier un fil SMA, qui s'étend le long des branches de la genouillère et sur lequel au moins une articulation de genouillère et les articulations d'extrémité sont ainsi articulées que l'élément à mémoire de forme actionne la genouillère lorsqu'il est activé.

10. Dispositif selon l'une des revendications 1, à 9,
**caractérisé en ce que** le moyen d'entraînement (5) est articulé d'une part sur un contre-palier fixe le long du guide (2) et coopère avec le moyen (1) lorsqu'il est activé.

11. Dispositif selon la revendication 8 ou 10,
**caractérisé en ce que** le contre-palier (4) sur lequel l'actionneur (3) est fixé d'un côté et le contre-palier sur lequel le moyen d'entraînement (5) est articulé, sont reliés par une structure mécanique commune.

12. Dispositif selon l'une des revendications 1, à 11,
**caractérisé en ce que** le moyen formé comme un élément de verrouillage (1) pouvant être déverrouillé est formé pour verrouiller deux composants, lequel, dans l'état déverrouillé, est relié à l'un composant via l'actionneur (3) et l'accumulateur d'énergie,
que l'élément de verrouillage (1) adopte un état déverrouillé dans une première position le long du guide (2), et
que le long du guide (2), un deuxième élément est prévu dans une deuxième position, avec lequel l'élément de verrouillage (1) entre en liaison fonctionnelle fixe séparable lorsqu'il est dévié dans la deuxième position.

13. Dispositif selon l'une des revendications 1, à 12, **caractérisé en ce que** l'élément de verrouillage (1) présente au moins deux segments (1a, 1b, 1c) pouvant être déplacés radialement en direction du guide,
que le deuxième moyen prévoit un élément de taquet ainsi qu'une partie de boitier entourant l'élément de taquet radialement,
que lorsque l'élément de verrouillage (1) est dévié dans la deuxième position, les segments (1a, 1b, 1c) peuvent être entraînés radialement vers l'extérieur au moyen de l'élément de taquet, de façon à ce que les segments (1a, 1b, 1c) effectuent une liaison par serrage avec la partie de boitier entourant les segments radialement.

14. Dispositif selon la revendication 13,
**caractérisé en ce que** les segments (1a, 1b, 1c) prévoient un élément de rappel qui renvoie automatiquement les segments déviés radialement vers l'extérieur dans une position radiale intérieure, tant que l'élément de taquet n'entre pas en liaison fonctionnelle avec l'élément de verrouillage (1).

15. Dispositif selon la revendication 7,
**caractérisé en ce que** le matériau convertisseur est du SMA.

16. Utilisation du dispositif selon l'une des revendications 1 à 14 pour le verrouillage séparable de composants de véhicules automobiles, en particulier de portes de véhicules automobiles avec la carrosserie de véhicule automobile stable en cas de collision.
